# EUROPEAN PATENT SPECIFICATION

(11) **EP 2 879 371 B1**
(45) Date of publication and mention of the grant of the patent: **21.12.2016**
(21) Application number: 13195027.1
(22) Date of filing: 29.11.2013
(51) Int. Cl.: H04N 5/232, H04N 7/18

(54) **System for following an object marked by a tag device with a camera**
System zum Verfolgen mit einer Kamera eines durch eine Etikettvorrichtung markierten Objekts
Système pour suivre un objet marqué par un dispositif d'étiquette avec une caméra

(43) Date of publication of application: 03.06.2015
(73) Proprietor: Axis AB, 223 69 Lund (SE)
(72) Inventor: Lundberg, Stefan, SE-22456 LUND (SE)
(74) Representative: Awapatent AB

(56) References cited:
- WO-A1-2013/131036
- JP-A- 2003 283 977
- US-A1- 2008 002 031
- US-B1- 8 553 501

## Description

### Technical field

The present invention relates to the field of cameras and in particular to a system for following an object marked by a tag device with a camera.

### Background

There are situations in which it is important to automatically follow a moving object, such as a person, by means of a camera. An example of such a situation is to follow security staff with a pan-tilt-zoom (PTZ) camera in order to increase their safety. In order to facilitate tracking of a moving object, it may be marked by a tag device which communicates with the camera. For example, a person to be tracked may wear or carry with it a tag device which transmits positional information to the camera.

WO 2013/131036 A1 discloses a system for pointing a camera at a remote target. The pointing of the camera is controlled by a combination of location information obtained by global positioning technology and orientation information obtained by line of sight detection. In particular, for short distances (typically <10 meters) between the camera and the target, a line of sight direction is obtained by means of the target sending a radiation signal to the camera. For large distances (typically >10 meters), global positioning techniques are used to measure the position of the target.

US 2008/0002031A1 discloses a tracking and control system which is provided for aiming a device, such as a video camera, towards a tag. The tag may include a locating device for determining tag locations and transmit the location information to the tracking and control system. The locating device is part of a triangulation type location system such as often used for global positioning systems.

JP 2003283977A relates to recording position information indicating a shooting point together with an image for the purpose of avoiding a situation where the shooting point cannot be distinguished from an image because there is a plurality of images having similar contents.

A drawback of global positioning techniques is that they provide positional information having a limited precision, in particular when it comes to measuring altitude. Thus, if the control of the camera is based on global positioning techniques the control of the camera will have a limited precision, in particular in the tilt direction. There is therefore a need to improve the control of the camera, in particular in the tilt direction, such that it may follow the marked object with a high precision even at long distances.

### Summary of the invention

In view of the above, it is an object of the present invention to mitigate the above drawbacks of the prior art and to provide an improved system for following an object marked by a tag device with a camera.

According to a first aspect of the invention, the above object is achieved by a system for following an object marked by a tag device with a camera, the system comprising: a tag device for marking the object to be followed and a camera arrangement for following the marked object, the tag device comprising: a tag positioning unit configured to measure a horizontal plane position of the tag device, a tag altitude unit configured to measure an altitude of the tag device by applying another measurement principle than the tag positioning unit, and a transmitter configured to transmit the horizontal plane position of the tag device and the altitude of the tag device to the camera arrangement, the camera arrangement comprising: a camera having pan and tilt functionality, a camera positioning unit configured to measure a horizontal plane position related to the camera, a camera altitude unit configured to measure an altitude related to the camera by applying another measurement principle than the camera positioning unit, a receiver configured to receive from the tag device, a horizontal plane position of the tag device and an altitude of the tag device; and a control unit configured to determine a difference in horizontal plane positions between the tag device and the camera based on the horizontal plane position of the tag device and the horizontal plane position related to the camera, and a difference in altitudes between the tag device and the camera based on the altitude of the tag device and the altitude related to the camera, and to control a pan and a tilt setting of the camera based on the determined differences such that the camera is oriented in the direction of the tag device.

With the above arrangement, the horizontal plane position and the altitude of both the tag device and the camera are measured according to different measurement principles. For example, this enables the altitude to be measured with a higher precision than the horizontal plane position. Since the control of pan and tilt settings of the camera are based on differences in horizontal plane positions and altitude of the tag device and the camera, the above system enables an improved precision in the control of the camera, in particular in the tilt setting.

By "different measurement principles" is generally meant that different physical principles are used to measure the parameter(s) of interest. For example, the horizontal plane position may be measured by means of measuring positions using satellites (this includes GPS) and the altitude may be measured by measuring air pressure (sometimes referred to barometric altitude measurement). By "same measurement principle" is similarly meant that the same physical principles are used to measure the parameter(s) of interest.

By "horizontal plane position" of an object is generally meant a two-dimensional position of the object corresponding to an orthogonal projection of the three-dimensional position of the object onto a horizontal plane. For example, the horizontal plane position may be represented by longitude and latitude coordinates, or by coordinates defined with respect to some other reference coordinate system.

By "altitude" of an object is generally meant the altitude of the object relative to some reference level, such as the mean sea surface level. The altitude is hence the vertical position of the object.

The wording horizontal plane position/altitude "related to the camera" is supposed to cover several situations. In one situation, the camera positioning unit and the camera altitude unit are comprised in the camera and are thus configured to measure the horizontal plane position/altitude of the camera. In another situation, the camera positioning unit and the camera altitude unit may be physically located at a distance from the camera. However, even in such situation the measurements of the camera positioning unit and the camera altitude unit may be related to the camera. For example, the mutual positions of the camera and the camera positioning unit /camera altitude unit may be known so that the position/altitude of the camera may be derived from the measurements of the camera positioning unit and the camera altitude. According to another example, the camera may have a fixed known position/altitude and the measurements of the camera positioning unit and the camera altitude unit may be used as reference values to remove influences of external disturbances with respect to the difference in position/altitude between the camera and the tag device. Also in this situation the measurements of the camera positioning unit and the camera altitude unit are thus related to the camera.

Generally, measurements of altitude and horizontal plane position may be influenced by external disturbances. For example, the altitude may be measured in terms of air pressure which is sensitive to weather changes. In order to reduce the impact of external disturbances on the altitude measurements, the camera altitude unit and the tag altitude unit may be configured to measure the altitude related to the camera and of the tag device, respectively, according to the same measurement principle. For example, both the camera arrangement and the tag device may be configured to measure altitude by measuring air pressure by means of a pressure sensor. Since the control of the camera is based on a difference in altitude between the tag device and the camera, and the altitudes are measured according to the same measurement principle, any additive influence of external disturbances on the altitude measurements is cancelled out.

Similarly, the camera positioning unit and the tag positioning unit may be configured to measure the horizontal plane position related to the camera and of the tag device, respectively, according to the same measurement principle. In this way, additive external disturbances on the horizontal plane position measurements may be cancelled out. For example, if the horizontal plane positions are measured by means of a global positioning system (GPS) device, disturbances in the GPS signaling may in this way be compensated for.

As exemplified above, the tag altitude unit may comprise a pressure sensor (a barometer) configured to measure air pressure. In this way, the tag altitude unit may be configured to measure the altitude of the tag device by measuring the air pressure. Similarly, the camera altitude unit may be configured to measure an air pressure by means of a pressure sensor (a barometer). Pressure sensors are known to give a good height accuracy of e.g. down to 0.25m.

As further exemplified above, the camera positioning unit and the tag positioning unit may each comprise a global satellite navigation system device (such as a global positioning system, GPS, device).

In some embodiments, the camera position unit and the camera altitude unit are comprised in the camera. In such situation, the camera positioning unit is configured to measure the horizontal plane position of the camera (not only a horizontal plane position *related to* the camera), and the camera altitude unit is configured to measure the altitude of the camera (not only an altitude *related to* the camera). This may for example be advantageous in case the camera is mobile. For example the camera may be mounted on a vehicle.

In other embodiments, the camera is fixed meaning that the camera has a fixed horizontal plane position and a fixed altitude. If so the camera arrangement may comprise an input unit configured to receive input relating to the fixed horizontal plane position and the fixed altitude of the camera. In other words, a user may input the fixed position and altitude of the camera.

However, since the horizontal plane position and altitude are still measured in the tag device and may be influenced by external disturbances, the difference between the measured altitude of the tag device and the fixed altitude of the camera and the difference between the measured horizontal plane position of the tag device and the fixed horizontal plane position of the camera will also be influenced by external disturbances. These disturbances are hence not automatically cancelled out as described above. In order to solve this problem, the camera arrangement may still measure a horizontal plane position related to the camera, and an altitude related to the camera, and uses the measured values as references. In particular, the control unit is configured to adjust a difference between the horizontal plane position of the tag device and the fixed horizontal plane position of the camera, and a difference between the altitude of the tag device and the fixed altitude of the camera using the horizontal plane position and the altitude measured by the camera positioning unit and camera altitude unit, respectively, and the control unit is configured to control the pan and the tilt setting of the camera based on the adjusted differences. For example, in case the tag device comprises a GPS device to measure the horizontal plane position and a pressure sensor to measure altitude, the camera positioning unit may comprise a GPS device and the camera altitude unit may comprise a pressure sensor to measure the air pressure. By using the values measured at the camera arrangement as reference values, external disturbances may still be cancelled out. As an alternative, instead of measuring the air pressure at the camera arrangement by means of a pressure sensor, a communications link to a local weather station may be set up. The air pressure provided by the local weather station then serves as a reference value for the current disturbance in air pressure measurements due to weather changes.

The control unit may further be configured to adjust a camera setting of the camera based on the difference in horizontal plane positions between the tag device and the camera, and the difference in altitudes between the tag device and the camera. The camera setting may for example be focus or zoom. This is for example advantageous in that the camera may be controlled to focus on the right distance, that is, the distance at which the object marked by the tag is present. Further it may be advantageous in that it simplifies focusing during low light conditions.

In some situations, for example for surveillance purposes, it may be advantageous to combine the images captured by the camera with positional information regarding the target. For this purpose, the camera may be configured to capture a video sequence of images, wherein information relating to the horizontal plane position of the tag device and/or the altitude of the tag device is added as metadata to the video sequence of images.

Positioning measuring techniques such as the global positioning system may have considerable response times, for instance in the order of seconds, making it difficult to track objects that move at high speeds. For example, it may be difficult to track security staff that quickly runs away. In order to mitigate this drawback, the tag device may further comprise an accelerometer configured to measure the acceleration of the tag device, the receiver may further be configured to receive from the tag device, accelerometer data indicating the acceleration of the tag device, and the control unit may further be configured to update the horizontal plane position and the altitude of the tag device based on the accelerometer data, and to control the pan and the tilt setting of the camera using the updated horizontal plane position and the updated altitude of the tag device. With this arrangement, the accelerometer may detect a sudden movement of the tag device and communicate this to the camera without delay. Based on the acceleration information, the camera may predict the motion of the tag device and update the position of the tag device in order to improve the control of the pan and tilt setting of the camera. In this way also a fast moving object may be followed by the camera.

The camera arrangement may comprise more than one camera. For example, there may be a network of cameras which together monitor a large area such as a square or a building. In such systems, it may be enough if there is one camera altitude unit and one camera positioning unit which serve all cameras in the network, in particular if the mutual positions/altitudes of the cameras is known. The system may thus comprise a further camera, wherein the further camera comprises the camera altitude unit and the camera positioning unit.

According to a second aspect of the invention, the above object is achieved by a camera arrangement for following an object marked by a tag device comprising a tag positioning unit configured to measure a horizontal plane position of the tag device and a tag altitude unit configured to measure an altitude of the tag device by applying another measurement principle than the tag positioning unit, the camera arrangement comprising: a camera having pan and tilt functionality, a camera positioning unit configured to measure a horizontal plane position related to the camera, a camera altitude unit configured to measure an altitude related to the camera by applying another measurement principle than the camera positioning unit, a receiver configured to receive from the tag device, a horizontal plane position of the tag device and an altitude of the tag device, and a control unit configured to determine a difference in horizontal plane positions between the tag device and the camera based on the horizontal plane position of the tag device and the horizontal plane position related to the camera, and a difference in altitudes between the tag device and the camera based on the altitude of the tag device and the altitude related to the camera, and to control a pan and a tilt setting of the camera based on the determined differences such that the camera is oriented in the direction of the tag device.

According to a third aspect of the invention, the above object is achieved by a method performed in a camera arrangement comprising a camera having pan and tilt functionality for following an object marked by a tag device comprising a tag positioning unit configured to measure a horizontal plane position of the tag device and a tag altitude unit configured to measure an altitude of the tag device by applying another measurement principle than the tag positioning unit, the method comprising: measuring a horizontal plane position related to the camera; measuring an altitude related to the camera by applying another measurement principle compared to the measuring of the horizontal plane position related to the camera; receiving from the tag device, a horizontal plane position of the tag device and an altitude of the tag device; determining a difference in horizontal plane positions between the tag device and the camera based on the horizontal plane position of the tag device and the horizontal plane position related to the camera, and a difference in altitudes between the tag device and the camera based on the altitude of the tag device and the altitude related to the camera, and controlling a pan and a tilt setting of the camera based on the determined differences such that the camera is oriented in the direction of the tag device.

According to a fourth aspect of the invention, the above object is achieved by a computer readable medium having stored thereon computer code instructions adapted to perform the method of the third aspect when executed by an apparatus having processing capability.

The second, third, and fourth aspects may generally have the same features and advantages as the first aspect. It is further noted that the invention relates to all possible combinations of features unless explicitly stated otherwise. The steps of any method disclosed herein do not have to be performed in the exact order disclosed, unless explicitly stated.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic illustration of a camera and an object marked by a tag device to be followed by the camera.
Fig. 2 is a schematic illustration of a tag device according to embodiments.
Fig. 3 is a schematic illustration of a camera arrangement according to embodiments.
Fig. 4 is a flow chart of a method for following an object marked by a tag device with a camera according to embodiments.
Fig. 5 is a schematic illustration of a system comprising a plurality of cameras and/or a plurality of tag devices in accordance with embodiments.

### Detailed description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. The systems and devices disclosed herein will be described during operation.

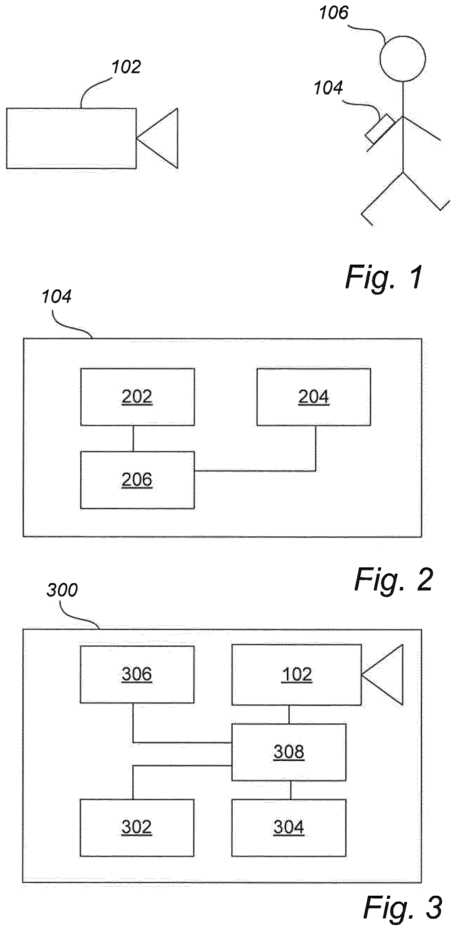

Fig. 1 illustrates a camera 102 and an object 106 to be followed by the camera 102. The object 106 may e.g. be a person, such as a security staff member, or any other object 106 that moves relative to the camera 102. The camera 102 is typically a pan-tilt-zoom camera whose settings may be controlled to keep the object 106 in the field of view of the camera 102. In order to facilitate the tracking of the object 106 and thereby facilitate the control of the camera 102, the object 106 is marked by a tag device 104. The tag device 104 may for example be attached to the object 106 such that the position of the tag device 104 essentially coincides with the position of the object 106 to be followed. The tag device 104 has to be well attached on the object to track. For example, there may be some sort of preset where on the object 106 the tag device 104 is placed. This preset can be done with a calibration step when the tag device 104 is attached to a new object 106. As will be further explained in the following, the tag device 104 is arranged to measure its position, i.e. the horizontal plane position and altitude (vertical position), and communicate this to the camera 102 or to a camera arrangement which comprises the camera 102. The communication may e.g. be via radio transmission. Based on the received three-dimensional position of the tag device 104 and a corresponding three-dimensional position of the camera 102, the pan- and tilt-settings of the camera 102 may be controlled to keep the object 106 marked by the tag device 104 in the field of view of the camera 102.

The camera 102 may form part of a camera arrangement which together with the tag device 104 constitute a system for following an object 106 marked by a tag device 104 with a camera 102. The components of such a system will now be described with reference to Figs 2 and 3.

Fig. 2 schematically illustrates a tag device 104. The tag device 104 comprises a tag positioning unit 202, a tag altitude unit 204, and a transmitter 206.

The tag positioning unit 202 is generally configured to measure a horizontal plane position of the tag device 104. For example the tag positioning unit 202 may comprise a device which measures the horizontal plane position in accordance with a global satellite navigation system, such as the American global positioning system (GPS), the Russian global navigation satellite system (GLONASS), the Chinese Beidou navigation satellite system, or the European Galileo system. The horizontal plane position may e.g. be given in terms of a two-dimensional coordinate such as a longitude/latitude coordinate. Alternatively, the tag positioning unit 202 may be configured to measure the horizontal plane position according to a local positioning system, such as an indoor positioning system. This is particularly advantageous if the system is intended to be used indoor, such as in a warehouse or in a department store. An indoor positioning system typically comprises a network of nodes with known position used to wirelessly locate objects or people inside a building. The nodes may e.g. send out signals which the tag device 104 may sense. For example, various optical, radio, or even acoustic technologies may be used. The position of the tag device 104 may be determined, using trilateration or triangulation, on basis of the received signal based on for instance time of arrival or received signal strength. Typically measurements from at least three nodes are required to give an unambiguous determination of the target device position. The tag altitude unit 204 is generally configured to measure an altitude, i.e. a vertical position, of the tag device 104. In particular, when measuring the altitude the tag altitude unit 204 is configured to apply another measurement principle than the tag positioning unit 202. For example, the tag altitude unit 204 may typically be configured to measure the altitude by measuring the air pressure. For this purpose the tag altitude unit 204 may comprise a pressure sensor (a barometer) by which the air pressure may be measured and converted into an altitude. There exist cheap and accurate pressure sensors which may measure the altitude with accuracy down to about 0.25m, e.g. the Altimeter/Barometer SMD500 from Bosch Sensortec. In other words, the tag altitude unit 204 is typically configured to measure the altitude at a higher precision than what would be possible if an altitude measurement from a global satellite navigation system was used.

The transmitter 206 is configured to transmit the horizontal plane position as measured by the tag horizontal plane positioning unit 202 and the altitude as measured by the tag altitude unit 204 according to well established technology, such as via radio link.

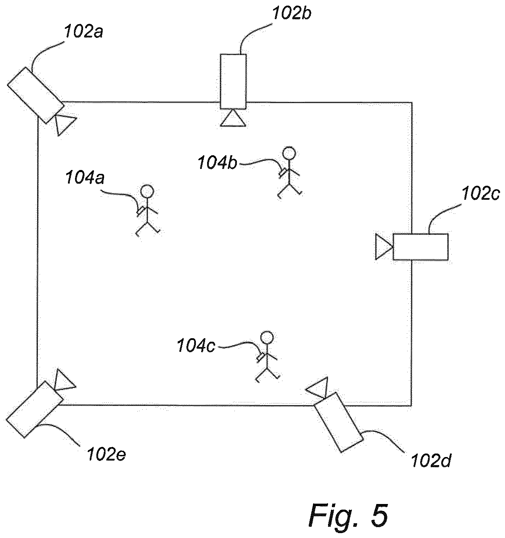

Fig. 3 illustrates a camera arrangement 300. The camera arrangement 300 comprises a camera 102, a receiver 306, a camera positioning unit 302, a camera altitude unit 304, and a control unit 308. The receiver 306, the camera positioning unit 302, the camera altitude unit 304, and the control unit 308 may be physically arranged in the camera 102, as shown in Fig. 1 and Fig. 5. However, the receiver 306, the camera positioning unit 302, the camera altitude unit 304, and the control unit 308 may also be physically arranged separately from the camera 102. The camera arrangement 300 may further comprise more than one camera, such as a network of cameras. If so, in particular if the mutual positions of the cameras remain fixed, it may be enough to have one receiver 306, one camera positioning unit 302, one camera altitude unit 304, and/or one control unit 308 serving the whole system of cameras. The one receiver 306, one camera positioning unit 302, one camera altitude unit 304, and one control unit 308 may e.g. be located in one of the cameras in the system or provided separately from the cameras.

The receiver 306 is configured to receive, e.g. via radio link, data from the transmitter 206 of the tag device 104. Such data may specifically include the horizontal plane position of the tag device 104 and the altitude of the tag device 104.

The camera positioning unit 302 is generally configured to measure a horizontal plane position related to the camera 102. Similarly to the tag positioning unit 202, the camera positioning unit 302 may comprise a device which measures the horizontal plane position in accordance with a global satellite navigation system, such as the American global positioning system (GPS), the Russian global navigation satellite system (GLONASS), the Chinese Beidou navigation satellite system, or the European Galileo system. Alternatively, in particular if the system is intended for use indoors, the camera positioning unit 302 may measure the position in accordance with a local positioning system (of GPS type) set up at the relevant location as further described above with respect to the tag device 104. The horizontal plane position may e.g. be given in terms of a two-dimensional coordinate such as a longitude/latitude coordinate. Preferably, the camera positioning unit 302 applies the same measurement principle as the tag positioning unit 202 when measuring the horizontal plane position. In this way, the tag positioning unit 202 and the camera positioning unit 302 are subject to the same type of measurement disturbances, such as the same disturbances in GPS signaling.

The camera altitude unit 204 is generally configured to measure an altitude, i.e. a vertical position, related to the camera 102. Similarly to the arrangement in the tag device 104, when measuring the altitude the camera altitude unit 304 is configured to apply another measurement principle than the camera positioning unit 302. For example, the camera altitude unit 304 is typically configured to measure the altitude by measuring the air pressure (e.g. by means of a pressure sensor as discussed above) as opposed to the camera positioning unit 302 which typically measures the horizontal plane position based on a global satellite navigation system. Preferably, the camera altitude unit 304 applies the same measurement principle as the tag altitude unit 204. In this way, the camera altitude unit 304 and the tag altitude unit 204 are subject to the same type and same amount of measurement disturbances, such as the same disturbances caused by changing air pressure due to weather conditions. The measurements of the camera altitude unit 204 may also be used for other purposes. For example, a measured air pressure may be used to determine the reliability of a fault detection test as further described in co-pending EP application number 13446503.8.

The control unit 308 is configured to receive horizontal plane position and altitude data from the tag device 104 via receiver 306, and horizontal plane position and altitude data related to the camera 102 from the camera positioning unit 302 and the camera altitude unit 304. The control unit 308 typically comprises a processing unit which allows the control unit 308 to process the received data in order to control a pan and a tilt setting of the camera 102. For this purpose the control unit 308 is operatively connected to the camera 102 and may send control commands to the camera 102 in order to instruct the camera 102 to adjust the pan and tilt, and possibly also other settings such as focus and zoom, such that the tag device 104 (and also the object 106 marked by the tag device 104) is in the field of view of the camera 102. The control unit 308 may be implemented in hardware, software or a combination thereof. For example, the control unit 308 may be associated with a (non-transitory) computer-readable medium on which there are stored computer code instructions implementing the various methods disclosed herein.

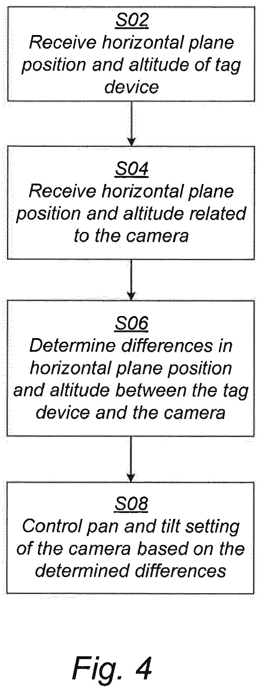

The operation of the above disclosed system, and in particular the operation of the control unit 308 will now be explained in more detail with reference to Figs 1-3 and the flow chart of Fig. 4.

As discussed above, the control unit 308 is configured to control at least a pan and a tilt setting of the camera 102. In order to do so, the control unit 308 in step S02 receives a horizontal plane position and an altitude of the tag device 104. Further, in step S06, the control unit receives a horizontal plane position and an altitude related to the camera 102.

Based on the received data the control unit 308 controls a pan and a tilt setting of the camera 102. In particular, the control unit 308 in step S06 calculates a difference in horizontal plane positions between the tag device 104 and the camera 102, and a difference in altitudes between the tag device 104 and the camera 102. The former of these differences is calculated on the basis of the measured horizontal plane position of the tag device 104 and the measured horizontal plane position related to the camera 102. The latter of these differences is calculated on the basis of the measured altitude of the tag device 104 and the measured altitude related to the camera 102. When determining these differences a number of cases may arise.

According to one embodiment, the camera positioning unit 302 and the camera altitude unit 304 are arranged in the camera 102 or in the vicinity of the camera 102, such that the horizontal plane position and the altitude measured by these units 302, 304 give a good estimate of the horizontal plane position and altitude of the camera 102. In such a case, the control unit 308 calculates the difference in horizontal plane positions between the tag device 104 and the camera 102 by forming a difference between the horizontal plane position measured by the tag positioning unit 202 and the horizontal plane position measured by the camera positioning unit 302. Further, the control unit 308 calculates the difference in altitude between the tag device 104 and the camera 102 by forming a difference between the altitude measured by the tag positioning unit 202 and the altitude measured by the camera positioning unit 302.

Preferably, the horizontal plane positions measured in the camera arrangement 300 and in the tag device 104 are measured according to the same measurement principle, e.g. by means of a global satellite navigation system device. Likewise, it is preferred that the altitudes measured in the camera arrangement 300 and in the tag device 104 are measured according to the same measurement principle, e.g. by measuring air pressure. If this is the case, additive disturbances, such as disturbances in a GPS signal or disturbances caused by changing weather conditions, will be canceled out when the differences are calculated.

According to another embodiment, the camera positioning unit 302 and the camera altitude unit 304 are arranged in the camera arrangement 300 but not in the camera 102. For example, the camera positioning unit 302 and the camera altitude unit 304 may be arranged in a further camera in the camera arrangement 300. In such a case, the horizontal plane position and the altitude measured by the units 302, 304 do not give a precise estimate of the horizontal plane position and the altitude of the camera 102. However, the horizontal plane position and altitude measured by the units 302, 304 may still be used to predict the horizontal plane position and altitude of the camera 102. For example, if the mutual positions of the camera 102 and the units 302 and 304 are known, the horizontal plane position and altitude of the camera may be predicted by adding the known off-set in positions to the measurements provided by the units 302, 204. Once the horizontal plane position and altitude of the camera have been predicted in this way, the differences in horizontal plane position and altitude between the tag device 104 and the camera 102 may readily be determined similarly to what has been described above with respect to the previous embodiment.

Also in this case it is advantageous if the horizontal plane positions measured in the camera arrangement 300 and in the tag device 104 are measured according to the same measurement principle, e.g. by means of a global satellite navigation system device, in order to cancel out external disturbances. Likewise, it is advantageous if the altitudes measured in the camera arrangement 300 and in the tag device 104 are measured according to the same measurement principle, e.g. by measuring air pressure.

According to one embodiment, the camera 102 has a known horizontal plane position and a known altitude (e.g. since the camera is fixed at a certain position/altitude, or since it moves according to a known path). The horizontal plane position and the altitude of the camera 102 may for instance be input to the camera arrangement 300.The camera arrangement 300 may for this purpose comprise an input unit (not shown) configured to receive a (fixed) horizontal plane position and (fixed) altitude of the camera. The input unit may for example be in the form of a graphical user interface via which a user may enter the camera coordinates.

One way of determining the difference in horizontal plane positions between the tag device 104 and the camera 102 would be to calculate the difference between measured horizontal plane position of the tag device 104 and the horizontal plane position of the camera 104 entered by the user. Likewise, an approach to determine the difference in altitude between the tag device 104 and the camera 102 would be to calculate the difference between the measured altitude of the tag device 104 and the altitude of the camera 104 entered by the user. However, with such an approach it would not be possible to compensate for external disturbance associated with the measurements performed in the tag device 104, which in turn would influence the precision of the control of the camera 102.

For this reason it is advantageous to have a camera positioning unit 302 and a camera altitude unit 304 somewhere in the camera arrangement 300 which are configured to measure horizontal plane position and altitude in the same manner or at least according to the same measurement principle as the tag positioning unit 202 and tag altitude unit 204, respectively. For instance, if the tag altitude unit 204 measures altitude by measuring air pressure using a pressure sensor, the camera altitude unit 304 may also comprise a pressure sensor. As an alternative, the camera altitude unit 304 could include a link to a local weather service which provides a measure of the air pressure caused by changes in weather. The control unit 308 may then use the measurements from the camera positioning unit 302 and the camera altitude unit 304 as reference values in order to cancel out currently present external disturbances in the measurements received from the tag device 104. For example, the measurements from the camera positioning unit 302 and the camera altitude unit 304 may be compared to a known position/altitude of these units 302, 304 in order to give an estimate - a reference value - of the current disturbances on position and altitude measurements. The control unit 308 may use the so estimated current disturbances to adjust the measurements received from the tag device 104. For example, the control unit 308 may adjust the difference between the horizontal plane position of the tag device 104 and the known horizontal plane position of the camera, and the difference between the altitude of the tag device 104 and the known altitude of the camera by subtracting the measured current disturbances.

Based on the differences determined in step S06 the control unit in step S08 controls a pan and a tilt setting of the camera 102 such that the camera 102 is oriented in the direction of the tag device 104. Specifically, the difference in horizontal plane positions defines a vector in the horizontal plane pointing from the camera 102 to the horizontal plane position of the tag device 104. The control unit 308 may control the pan setting of the camera such that the pan direction corresponds to the direction of the so defined vector.

Based on the difference in horizontal plane positions and the difference in altitudes, the control unit 308 may calculate an elevation angle of the tag device 104 relative to the camera 102 in order to control the tilt setting of the camera such that the tilt direction corresponds to the elevation angle.

In accordance to the above, the control unit 308 may control the pan and tilt of the camera 102. Pan and tilt adjusts the viewing direction by rotating the camera 102 independently around its pan and tilt axis. However, the control unit 308 may also control other parameters of the camera 102, such as zoom and focus settings based on the differences determined in step S06. For example, if an object 106 is very far away, the camera 102 may be optically and/or digitally zoomed to enlarge the object 106 in the view. Zooming in makes the field of view narrower and zooming out makes the field of view wider. This is done optically by moving lens elements mechanically in front of the camera sensor, thereby changing the focal length of the lens, or digitally by making a centre cutout of a captured image and enlarging the object 106 by scaling the captured image. Moreover, all objects 106 in a scene cannot be in focus simultaneously if the camera 102 has a larger aperture which is used to capture a higher amount of light during low light situations. Therefore cameras with longer focal length have to be focused to render objects at a selected distance from the camera sharp. Other objects at different distances than the focus distance will be blurred or out of focus. The need for focusing is typically larger for cameras with longer focal length and high amount of zoom. Focus is typically adjusted by moving another lens group in the camera 102.

According to one embodiment, the control unit 308 is configured to perform optical zoom of the camera 102 while following the tag device 104. Based on the differences determined in step S06, the control unit 308 may determine the Euclidean distance to the object 106. Further, the control unit 308 may access information regarding how large the tagged object 106 is since the size of the object 106 may vary depending on whether it for instance is a safety guard, a car or a bus. Such information is typically preset by a user or automatically detected with a video analytics algorithm in the camera 102. Additionally, the control unit 308 may access a pre-defined safety margin (i.e. a desired margin in the image around the object 106) which is desirable if it is important to observe the surroundings around the object 106 or if the object 106 is moving very fast with unpredictable changes in direction. With this information and knowledge about the distance between the camera 102 and the object 106, it is possible for the control unit 308 to adjust the field of view (the zoom factor) of the camera 102 such that the field of view includes the object 106. In particular, the control unit 308 may calculate the required field of view in degrees from the knowledge about the size of the object 106, additional safety margins and the distance from the camera 102 to the object 106.The control unit 308 then instructs the camera 102 to zoom in on the required field of view. In order to do so, the camera 102 may use a look-up table which comprises information regarding how to move a zoom affecting lens group relative to the camera sensor in order to achieve the required field of view. Based on the information from the look-up table, the zoom affecting lens group may be moved relative to the camera sensor using a motor controller. The look-up table is typically pre-calculated during camera block design and fabrication to match the lens of the camera 102.

When the camera 102 is zoomed in (long focal length) the depth of field will be limited. For this reason, it is preferred to adjust the focus setting of the camera 102 to capture objects 106 at a certain distance. In particular, it is preferred to adjust the focus of the camera 102 such that the object 106 which is located at the distance of the tag device 104 is in focus. The focus adjustment may e.g. be performed in the camera 102 by mechanically moving an appropriate lens group within the camera lens. Based on the distance from the camera 102 to the object 106, the control unit 308 may determine a desired position of the lens group within the camera lens. Specifically, the determination of the desired position may be performed by means of a table look-up. The control unit 308 may then write the value of the desired position to a motor controller which positions the lens group inside the camera block.

The above discussed focus-setting approach is advantageous or at least a good complement to known auto-focus methods. An auto-focus function adjusts the lens position automatically such that a selected part (typically a center part) of the image or a certain object (such as a detected face) in the image will be as sharp as possible. Some auto-focus systems move the focusing lens group to detect if there are other objects nearby which are more important so that a focus shift has to be done. This results in focus hunting meaning that the control algorithm does not keep a stable and good focus on the correct object. Another problem which may arise with auto-focus methods is that objects passing by between the target and the camera might "steal" the focus, such as a bird suddenly crossing the scene. Moreover, in dark scenes with a lot of image noise auto-focusing performance will be very low or non-existing. Thus, by controlling focus based on the distance between the camera 102 and the tag device 104, the camera 102 can be controlled to focus at the correct distance, thereby keeping the desired object 106 in focus.

In addition to controlling various settings of the camera 102, the control unit 308 may generate events based on the distance between the camera 102a and the tag device 104. An event may be to start filming, stop filming or to ask another camera in the system to start filming. For example, in a home surveillance system, an event to stop filming may be generated when a user wearing a tag device 104 comes home, i.e. is closer than a threshold distance to the camera 102, or to start filming when the user leaves home, i.e. when the tag device 104 is at a larger distance than a threshold distance to the camera 102.

Another example of an event is that the camera 102 is not allowed to film a tagged object 106 or save a film of the tagged object 106 if the object 106 is located at a certain position, i.e. distance and direction, relative to the camera 102.

In a system with several cameras (such as the one in Fig. 5), an example of a distance based event is to switch to another camera which is more suited to record video at the current distance. For example, a pan-tilt-zoom camera is suited for longer distances while a 360 degree overview camera is more suited for short distances, such as less than four meters.

If a tag device 104 leaves an area monitored by a first system and moves to an area monitored by a second system, such as an area which the tagged object 106 only occasionally visits, the control unit 308 may generate an event to move or copy recorded video from the second system to the first system in order to store the recorded video in the first system.

The system disclosed herein may further be combined with an audio recording system comprising microphones located at different spatial positions. In such a setup, the control unit 308 may generate an event to record audio using the microphone which is currently closest in position to the tag device 104.

According to one example, the camera 102 may be mounted on a first object, such as a first person, and a plurality of tag devices 104 may be mounted on a plurality of second objects, such as a plurality of second persons. In such a system, the control unit 308 may generate an event to automatically start filming as soon as one of the tag devices 104 comes close enough to the camera 102, for instance closer than a certain threshold. In this way a collection of video sequences is generated wherein each video sequence is associated with a respective one of the tag devices 104. The collection of video sequences may be divided into groups such that video sequences being associated with the same tag device 104 are included in the same group. The video sequences may then be saved group wise or, when needed, automatically be exported group wise.

According to embodiments the control unit 308 may add positional information relating to the position/altitude of the tag device 104 as metadata to the video sequence of images captured by the camera 102. The combined video sequence and positional information may be used for surveillance purposes to improve the tracking of e.g. security staff. The positional information may for example be used as input to object, face or motion detection by means of image processing in the video sequence of images.

A know drawback with global position systems is that there is a delay time until you receive a new position. During this time an object 106 marked by a tag device 104 may start a fast movement in any direction. This can result in that the camera view is not wide enough to keep the object 106 in view. For example, the camera 102 may lose track of the object 106 in pan, tilt and/or focus. To avoid this, the tag device 104 (and possibly also the camera arrangement 300) may be equipped with an accelerometer/gyrometer /magnetometer that will detect sudden movement. For example, a nine-axis sensor may be used with a three-axis gyro for rotational measurement, three-axis accelerometer for acceleration measurement, and three-axis magnetometer to measure heading (a compass). The response of the accelerometer/gyrometer/magnetometer is immediate and may be communicated from the tag device 104 to the camera arrangement 300 via transmitter 206 and receiver 306. Based on the received acceleration information, the control unit 308 may predict the motion of the tag device 104. For example, if acceleration, heading, initial position and initial velocity is known, the control unit 308 may calculate a new position by propagating the information about acceleration and velocity back to the initial position. In particular, the control unit 308 may apply a double integration method where the acceleration is integrated twice.

The accelerometer measurement is typically associated with a measurement noise having a non-zero mean. The noise will be accumulated during the integration and give rise to a sensor drift that will give a fairly good estimate of velocity but larger error in the position. The control unit 308 may compensate for this drift. In particular, since the control unit 308 eventually gets a new position from the tag positioning unit 202, the drift can be compensated for by using for instance a Kalman filter where the estimated position and the position from the tag positioning unit 202 are combined. In this way, the measurement from the tag positioning unit will zero out the drift and produce a reliable estimate of the position. Using the position estimate, the control unit 308 may instruct the camera 102 to adjust its direction (pan/tilt) or to adjust focus such that it captures high quality images of the object 106.

According to embodiments, the system for following an object marked by a tag device by a camera may comprise more than one camera and/or more than one tag device. Fig. 5 illustrates such a system where there are a plurality of cameras 102a-e and a plurality of tag devices 104a-c. Each camera 102a-e may be configured to follow one or more of the tag devices 104a-c. In case one camera, say camera 102a, is configured to follow more than one tag device, say tag devices 104a and 104b, several options are available. According to one option, the control unit 308 may set the pan, tilt and zoom settings of the camera 102a such that both tag devices 104a and 104b to be followed are captured in the image. For example, the pan and tilt settings may be set so as to direct the camera 102a at one of the tag devices 104a or in between the tag devices 104a and 104b. Further, the zoom may be adjusted such that the camera 102a zooms out until the tag devices 104a and 104b to be followed are visible in the image. This is possible since the control unit 308 receives position/altitude data from the tag devices 104a and 104b. According to another option, the tag devices 104a-c may be associated with a priority. Thus the camera 102a may be configured to follow the tag device 104a having the highest priority. The priority may be pre-set in the system or may be associated with the distance between the camera 102a and the tag devices 104a-c. For instance, the tag device 104a being closest to the camera 102a may be given the highest priority. The control unit 308 may further generate an event to the other cameras 102b-e in the system to follow the tag devices 104b-c having a lower priority.

Now the case where a plurality of cameras 102a-e is to follow a tag device, say tag device 104a, will be considered. For example, the camera 102a being closest to the tag device 104a may initially follow the tag device 104a. As the tag device 104a moves around it may at some point instead be closer to camera 102b. At that point, it may be decided that camera 102b is to follow the tag device 104a instead or as a complement to camera 102a. Based on the distances between the tag device 104a and the cameras 102a-e, the control unit 308 of the camera arrangement 300 may thus decide which of the cameras 102a-e is to currently follow the tag device 104a and may instruct the cameras 102a-e accordingly.

It will be appreciated that a person skilled in the art can modify the above-described embodiments in many ways and still use the advantages of the invention as shown in the embodiments above. For example, the camera could be a heat or infrared camera. In case the camera is mobile, since it for instance is mounted on a person, the camera may comprise a motion detection sensor (accelerometer/gyrometer /magnetometer) which is used to predict the motion of the camera in order to keep the tagged object optimally in the field of view of the camera. Thus, the invention should not be limited to the shown embodiments but should only be defined by the appended claims. Additionally, as the skilled person understands, the shown embodiments may be combined.

## Claims

1. A camera arrangement (300) for following an object (106) marked by a tag device (104) comprising a tag positioning unit (202) configured to measure a horizontal plane position of the tag device (104) and a tag altitude unit (204) configured to measure an altitude of the tag device (104) by applying another measurement principle than the tag positioning unit (202), the camera arrangement (300) comprising:
a camera (102) having pan and tilt functionality,
a camera positioning unit (302) configured to measure a horizontal plane position related to the camera (102),
a receiver (306) configured to receive, from the tag device (104), a horizontal plane position of the tag device (104), and
a control unit (308) configured to determine a difference in horizontal plane positions between the tag device (104) and the camera (102) based on the horizontal plane position of the tag device (104) and the horizontal plane position related to the camera (102), and to control a pan and a tilt setting of the camera (102) based on the determined difference in horizontal plane positions such that the camera (102) is oriented in the direction of the tag device (104),
**characterized by**
a camera altitude unit (304) configured to measure an altitude related to the camera (102) by applying another measurement principle than the camera positioning unit (302),
the receiver (306) being configured to receive an altitude of the tag device (104), and
the control unit (308) being configured to determine a difference in altitudes between the tag device (104) and the camera (102) based on the altitude of the tag device (104) and the altitude related to the camera (102), and to further control the pan and a tilt setting of the camera (102) based on the determined difference in altitudes.

2. A system for following an object (106) marked by a tag device (104) with a camera (102), the system comprising:
a tag device (104) for marking the object (106) to be followed and a camera arrangement (300) according to claim 1 for following the marked object (106),
the tag device (104) comprising:
a tag positioning unit (202) configured to measure a horizontal plane position of the tag device (104),
a tag altitude unit (204) configured to measure an altitude of the tag device (104) by applying another measurement principle than the tag positioning unit (202), and
a transmitter (206) configured to transmit the horizontal plane position of the tag device (104) and the altitude of the tag device (104) to the camera arrangement (300).

3. The system of claim 2, wherein the camera altitude unit (304) and the tag altitude unit (204) are configured to measure the altitude related to the camera (102) and of the tag device (104), respectively, according to the same measurement principle.

4. The system of claim 2 or 3, wherein the camera positioning unit (302) and the tag positioning unit (202) are configured to measure the horizontal plane position related to the camera (102) and of the tag device (104), respectively, according to the same measurement principle.

5. The system of claim 3 or 4, wherein the tag altitude unit (204) comprises a pressure sensor configured to measure air pressure.

6. The system of any one of claims 3-5, wherein the camera altitude unit (304) is configured to measure an air pressure by means of a pressure sensor or by setting up a communications link to a local weather station.

7. The system of any one of claims 3-6, wherein the camera positioning unit (302) and the tag positioning unit (202) each comprise a global satellite navigation system device.

8. The system of any one of claims 2-7, wherein the camera positioning unit (302) is configured to measure the horizontal plane position of the camera (102), and the camera altitude unit (304)is configured to measure the altitude of the camera (102).

9. The system of any one of claims 3-7, wherein
the camera (102) has a fixed horizontal plane position and a fixed altitude and the camera arrangement (300) comprises an input unit configured to receive input relating to the fixed horizontal plane position and the fixed altitude of the camera (102),
the control unit (308) is configured to adjust a difference between the horizontal plane position of the tag device (104) and the fixed horizontal plane position of the camera (102), and a difference between the altitude of the tag device (104) and the fixed altitude of the camera (102) using the horizontal plane position and the altitude measured by the camera positioning unit (302) and camera altitude unit (304), respectively, and
the control unit (308) is configured to control the pan and the tilt setting of the camera (102) based on the adjusted differences.

10. The system of any one of claims 2-9, wherein the control unit (308) is further configured to adjust a camera setting, such as focus or zoom, based on the difference in horizontal plane positions between the tag device (104) and the camera (102), and the difference in altitudes between the tag device (104) and the camera (102).

11. The system of any one claims 2-10, wherein the camera (102) is configured to capture a video sequence of images and wherein information relating to the horizontal plane position of the tag device (104) and/or the altitude of the tag device (104) is added as metadata to the video sequence of images.

12. The system of any one of claims 2-11 wherein
the tag device (104) further comprises an accelerometer configured to measure the acceleration of the tag device (104),
the receiver (306) is further configured to receive from the tag device (104), accelerometer data indicating the acceleration of the tag device (104), and
the control unit (308) is further configured to update the horizontal plane position and the altitude of the tag device (104) based on the accelerometer data, and to control the pan and the tilt setting of the camera (102) using the updated horizontal plane position and the updated altitude of the tag device (104).

13. The system of any one of claims 2-12, comprising a further camera (102a-e), wherein the further camera (102a-e) comprises the camera altitude unit and the camera positioning unit.

14. A method performed in a camera arrangement (300) comprising a camera (102) having pan and tilt functionality for following an object (106) marked by a tag device (104) comprising a tag positioning unit (202) configured to measure a horizontal plane position of the tag device (104) and a tag altitude unit configured to measure an altitude of the tag device (104) by applying another measurement principle than the tag positioning unit (202), the method comprising:
measuring a horizontal plane position related to the camera (102);
receiving (S02) from the tag device (104), a horizontal plane position of the tag device;
determining (S06) a difference in horizontal plane positions between the tag device (104) and the camera (102) based on the horizontal plane position of the tag device (104) and the horizontal plane position related to the camera (102), and
controlling (S08) a pan and a tilt setting of the camera (102) based on the determined difference in horizontal plane positions such that the camera (102) is oriented in the direction of the tag device (104),
**characterized by**
measuring an altitude related to the camera (102) by applying another measurement principle compared to the measuring of the horizontal plane position related to the camera (102);
receiving, from the tag device (104), an altitude of the tag device (104), and
determining a difference in altitudes between the tag device (104) and the camera (102) based on the altitude of the tag device (104) and the altitude related to the camera (102).

15. A computer readable medium having stored thereon computer code instructions adapted to perform the method of claim 14 when executed by an apparatus having processing capability.

## Patentansprüche

1. Kameraanordnung (300) zum Verfolgen eines Objekts (106), das durch eine Markierungseinrichtung (104) markiert ist, die eine Markierungspositionierungseinheit (202), welche dazu ausgebildet ist, eine Position in der waagerechten Ebene der Markierungseinrichtung (104) zu messen, und eine Markierungshöheneinheit (204), welche dazu ausgebildet ist, durch Anwenden eines anderen Messprinzips als die Markierungspositionierungseinheit (202) eine Höhe der Markierungseinrichtung (104) zu messen, umfasst, wobei die Kameraanordnung (300) Folgendes umfasst:
eine Kamera (102) mit Schwenk- und Kippfunktion,
eine Kamerapositionierungseinheit (302), die dazu ausgebildet ist, eine Position in der waagerechten Ebene, die der Kamera (102) zugehörig ist, zu messen,
einen Empfänger (306), der dazu ausgebildet ist, von der Markierungseinrichtung (104) eine Position in der waagerechten Ebene der Markierungseinrichtung (104) zu erhalten, und
eine Steuereinheit (308), die dazu ausgebildet ist, auf Basis der Position in der waagerechten Ebene der Markierungseinrichtung (104) und der Position in der waagerechten Ebene, die der Kamera (102) zugehörig ist, einen Unterschied der Positionen in der waagerechten Ebene zwischen der Markierungseinrichtung (104) und der Kamera (102) zu bestimmen, und auf Basis des bestimmten Unterschieds der Positionen in der waagerechten Ebene eine Schwenk- und eine Kippeinstellung der Kamera (102) so zu steuern, dass die Kamera (102) in die Richtung der Markierungseinrichtung (104) ausgerichtet ist,
**gekennzeichnet durch**
eine Kamerahöheneinheit (304), die dazu ausgebildet ist, **durch** Anwenden eines anderen Messprinzips als die Kamerapositionierungseinheit (302) eine Höhe, die der Kamera (102) zugehörig ist, zu messen,
wobei der Empfänger (306) dazu ausgebildet ist, eine Höhe der Markierungseinrichtung (104) zu erhalten, und
die Steuereinheit (308) dazu ausgebildet ist, auf Basis der Höhe der Markierungseinrichtung (104) und der Höhe, die der Kamera (102) zugehörig ist, einen Unterschied der Höhen zwischen der Markierungseinrichtung (104) und der Kamera (102) zu bestimmen und ferner die Schwenk- und die Kippeinstellung der Kamera (102) ferner auf Basis des bestimmten Unterschieds der Höhen zu steuern.

2. System zum Verfolgen eines Objekts (106), das mit einer Markierungseinrichtung (104) markiert ist, mit einer Kamera (102), wobei das System Folgendes umfasst:
eine Markierungseinrichtung (104), um das zu verfolgende Objekt (106) zu markieren, und eine Kameraanordnung (300) nach Anspruch 1, um das markierte Objekt (106) zu verfolgen,
wobei die Markierungseinrichtung (104)
eine Markierungspositionierungseinheit (202), welche dazu ausgebildet ist, eine Position in der waagerechten Ebene der Markierungseinrichtung (104) zu messen,
eine Markierungshöheneinheit (204), welche dazu ausgebildet ist, durch Anwenden eines anderen Messprinzips als die Markierungspositionierungseinheit (202) eine Höhe der Markierungseinrichtung (104) zu messen, und
einen Sender (206), der dazu ausgebildet ist, die Position der in der waagerechten Ebene Markierungseinrichtung (104) und die Höhe der Markierungseinrichtung (104) zu der Kameraanordnung (300) zu senden,
umfasst.

3. System nach Anspruch 2, wobei die Kamerahöheneinheit (304) und die Markierungshöheneinheit (304) dazu ausgebildet sind, die Höhe, die jeweils der Kamera (102) und der Markierungseinrichtung (104) zugehörig ist, gemäß dem gleichen Messprinzip zu messen.

4. System nach Anspruch 2 oder 3, wobei die Kamerapositionierungseinheit (302) und die Markierungspositionierungseinheit (202) dazu ausgebildet sind, die Position in der waagerechten Ebene, die jeweils der Kamera (102) und der Markierungseinrichtung (104) zugehörig ist, gemäß dem gleichen Messprinzip zu messen.

5. System nach Anspruch 3 oder 4, wobei die Markierungshöheneinheit (204) einen Drucksensor umfasst, der dazu ausgebildet ist, den Luftdruck zu messen.

6. System nach einem der Ansprüche 3 bis 5, wobei die Kamerahöheneinheit (304) dazu ausgebildet ist, einen Luftdruck durch einen Drucksensor oder durch Herstellen einer Kommunikationsverbindung mit einer lokalen Wetterstation zu messen.

7. System nach einem der Ansprüche 3 bis 6, wobei die Kamerapositionierungseinheit (302) und die Markierungspositionierungseinheit (202) jeweils eine globale Satellitennavigationssystemvorrichtung umfassen.

8. System nach einem der Ansprüche 2 bis 7, wobei die Kamerapositionierungseinheit (302) dazu ausgebildet ist, die Position in der waagerechten Ebene der Kamera (102) zu messen, und die Kamerahöheneinheit (304) dazu ausgebildet ist, die Höhe der Kamera (102) zu messen.

9. System nach einem der Ansprüche 3 bis 7, wobei
die Kamera (102) eine feste Position in der waagerechten Ebene und eine feste Höhe aufweist und die Kameraanordnung (300) eine Eingabeeinheit umfasst, die dazu ausgebildet ist, Eingaben in Zusammenhang mit der festen Position in der waagerechten Ebene und der festen Höhe der Kamera (102) zu erhalten,
die Steuereinheit (308) dazu ausgebildet ist, einen Unterschied zwischen der Position in der waagerechten Ebene der Markierungseinrichtung (104) und der festen Position in der waagerechten Ebene der Kamera (102) und einen Unterschied zwischen der Höhe der Markierungseinrichtung (104) und der festen Höhe der Kamera (102) unter Verwendung der Position in der waagerechten Ebene und der Höhe, die jeweils durch die Kamerapositionierungseinheit (302) und die Kamerahöheneinheit (304) gemessen werden, zu regulieren, und
die Steuereinheit (308) dazu ausgebildet ist, die Schwenk- und die Kippeinstellung der Kamera (102) auf Basis der regulierten Unterschiede zu steuern.

10. System nach einem der Ansprüche 2 bis 9, wobei die Steuereinheit (308) ferner dazu ausgebildet ist, eine Kameraeinstellung wie etwa den Brennpunkt oder die Vergrößerung auf Basis des Unterschieds der Positionen in der waagerechten Ebene zwischen der Markierungseinrichtung (104) und der Kamera (102) und dem Unterschied der Höhen zwischen der Markierungseinheit (104) und der Kamera (102) zu regulieren.

11. System nach einem der Ansprüche 2 bis 10, wobei die Kamera (102) dazu ausgebildet ist, eine Videoabfolge von Bildern aufzunehmen, und wobei Informationen im Zusammenhang mit der Position in der waagerechten Ebene der Markierungseinrichtung (104) und/oder der Höhe der Markierungseinrichtung (104) als Metadaten zu der Videoabfolge von Bildern hinzugefügt werden.

12. System nach einem der Ansprüche 2 bis 11, wobei
die Markierungseinrichtung (104) ferner einen Beschleunigungsmesser umfasst, der dazu ausgebildet ist, die Beschleunigung der Markierungseinrichtung (104) zu messen,
der Empfänger (306) ferner dazu ausgebildet ist, von der Markierungseinrichtung (104) Beschleunigungsmesserdaten zu erhalten, die die Beschleunigung der Markierungseinrichtung (104) angeben, und
die Steuereinheit (308) ferner dazu ausgebildet ist, die Position in der waagerechten Ebene und die Höhe der Markierungseinrichtung (104) auf Basis der Beschleunigungsmesserdaten zu aktualisieren und die Schwenk- und die Kippeinstellung der Kamera (102) unter Verwendung der aktualisierten Position in der waagerechten Ebene und der aktualisierten Höhe der Markierungseinrichtung (104) zu steuern.

13. System nach einem der Ansprüche 2 bis 12, umfassend eine weitere Kamera (102a bis e), wobei die weitere Kamera (102a bis e) die Kamerahöheneinheit und die Kamerapositionierungseinheit umfasst.

14. Verfahren, das in einer Kameraanordnung (300) durchgeführt wird, die eine Kamera (102) mit Schwenk- und Kippfunktionalität zum Verfolgen eines Objekts (106) umfasst, das durch eine Markierungseinrichtung (104) markiert ist, die eine Markierungspositionierungseinheit (202), welche dazu ausgebildet ist, eine Position in der waagerechten Ebene der Markierungseinrichtung (104) zu messen, und eine Markierungshöheneinheit welche dazu ausgebildet ist, durch Anwenden eines anderen Messprinzips als die Markierungspositionierungseinheit (202) eine Höhe der Markierungseinrichtung (104) zu messen, umfasst, wobei das Verfahren Folgendes umfasst:
Messen einer Position in der waagerechten Ebene, die der Kamera (102) zugehörig ist;
Erhalten (S02) einer Position in der waagerechten Ebene der Markierungseinrichtung von der Markierungseinrichtung (104);
Bestimmen (S06) eines Unterschieds der Positionen in der waagerechten Ebene zwischen der Markierungseinrichtung (104) und der Kamera (102) auf Basis der Position in der waagerechten Ebene der Markierungseinrichtung (104) und der Position in der waagerechten Ebene, die der Kamera (102) zugehörig ist, und
derartiges Steuern (S08) einer Schwenk- und einer Kippeinstellung der Kamera (102) auf Basis des bestimmten Unterschieds der Positionen in der waagerechten Ebene, dass die Kamera (102) in die Richtung der Markierungseinrichtung (104) ausgerichtet ist,
**gekennzeichnet durch**
Messen einer Höhe, die der Kamera (102) zugehörig ist, wobei verglichen mit der Messung der Position in der waagerechten Ebene, die der Kamera (102) zugehörig ist, ein anderes Messprinzip angewendet wird;
Erhalten einer Höhe der Markierungseinrichtung (104) von der Markierungseinrichtung (104); und
Bestimmen eines Unterschieds der Höhen zwischen der Markierungseinrichtung (104) und der Kamera (102) auf Basis der Höhe der Markierungseinrichtung (104) und der Höhe, die der Kamera (102) zugehörig ist.

15. Computerlesbares Medium, worauf Computercodebefehle gespeichert sind, die dazu ausgelegt sind, das Verfahren nach Anspruch 14 durchzuführen, wenn sie durch eine Vorrichtung mit Verarbeitungsfähigkeit ausgeführt werden.

## Revendications

1. Dispositif de caméra (300) pour suivre un objet (106) marqué par un dispositif d'étiquette (104) comprenant une unité de positionnement d'étiquette (202) configurée pour mesurer une position de plan horizontal du dispositif d'étiquette (104) et une unité d'altitude étiquette (204) configurée pour mesurer une altitude du dispositif d'étiquette (104) en appliquant un autre principe de mesure que l'unité de positionnement d'étiquette (202), le dispositif de caméra (300) comprenant:
une caméra (102) ayant une fonctionnalité de panoramique et d'inclinaison,
une unité de positionnement de caméra (302) configurée pour mesurer une position de plan horizontal par rapport à la caméra (102),
un récepteur (306) configuré pour recevoir, depuis le dispositif d'étiquette (104), une position de plan horizontal du dispositif d'étiquette (104) et
une unité de commande (308) configurée pour déterminer une différence des positions de plan horizontal entre le dispositif d'étiquette (104) et la caméra (102) sur la base des positions de plan horizontal du dispositif d'étiquette (104) et de la position de plan horizontal relative à la caméra (102) et commander un réglage de panoramique et d'inclinaison de la caméra (102) sur la base de la différence déterminée des positions de plan horizontal de sorte que la caméra (102) soit orientée dans la direction du dispositif d'étiquette (104),
**caractérisé par**
une unité d'altitude de caméra (304) configuré pour mesurer une altitude relative à la caméra (102) en appliquant un autre principe de mesure que l'unité de positionnement de caméra (302),
le récepteur (306) étant configuré pour recevoir une altitude du dispositif d'étiquette (104) et
l'unité de commande (308) étant configurée pour déterminer une différence d'altitudes entre le dispositif d'étiquette (104) et la caméra (102) sur la base de l'altitude du dispositif d'étiquette (104) et l'altitude relative à la caméra (102) et commander en outre un réglage de panoramique et d'inclinaison de la caméra (102) sur la base de la différence déterminée des altitudes.

2. Système de suivi d'un objet (106) marqué par un dispositif d'étiquette (104) avec une caméra (102), le système comprenant :
un dispositif d'étiquette (104) pour marquer l'objet (106) à suivre et un dispositif de caméra (300) selon la revendication 1 pour suivre l'objet marqué (106),
le dispositif d'étiquette (104) comprenant :
une unité de positionnement d'étiquette (202) configurée pour mesurer une position de plan horizontal du dispositif d'étiquette (104),
une unité d'altitude étiquette (204) configurée pour mesurer une altitude du dispositif d'étiquette (104) en appliquant un autre principe de mesure que l'unité de positionnement d'étiquette (202), et
un émetteur (206) configuré pour transmettre la position du plan horizontal du dispositif d'étiquette (104) et l'altitude du dispositif d'étiquette (104) au dispositif de caméra (300).

3. Système selon la revendication 2, dans lequel l'unité d'altitude de caméra (304) et l'unité d'altitude d'étiquette (204) sont configurées pour mesurer l'altitude par rapport à la caméra (102) et au dispositif d'étiquette (104), respectivement, selon le même principe de mesure.

4. Système selon la revendication 2 ou 3, dans lequel l'unité de positionnement de caméra (302) et l'unité de positionnement d'étiquette (202) sont configurées pour mesurer la position de plan horizontal par rapport à la caméra (102) et au dispositif d'étiquette (104), respectivement, selon le même principe de mesure.

5. Système selon la revendication 3 ou 4, dans lequel l'unité d'altitude d'étiquette (204) comprend un capteur de pression configuré pour mesurer la pression d'air.

6. Système selon une quelconque des revendications 3-5, dans lequel l'unité d'latitude de caméra (304) est configurée pour mesurer une pression d'air au moyen d'un capteur de pression ou en établissant une liaison de communication vers une station météo locale.

7. Système selon une quelconque des revendications 3-6, dans lequel l'unité de positionnement de caméra (302) et l'unité de positionnement d'étiquette (202) comprennent chacune un dispositif à système de navigation satellite global.

8. Système selon une quelconque des revendications 2-7, dans lequel l'unité de positionnement de caméra (302) est configurée pour mesurer la position de plan horizontal de la caméra (102) et l'unité d'altitude de caméra (304) est configurée pour mesurer l'altitude de la caméra (102).

9. Système selon une quelconque des revendications 3-7, dans lequel
la caméra (102) a une position de plan horizontal fixe et une altitude fixe et le dispositif de caméra (300) comprend une unité d'entrée configurée pour recevoir une entrée relative à la position de plan horizontal fixe et l'altitude fixe de la caméra (102),
l'unité de commande (308) est configuré pour ajuster une différence entre la position de plan horizontal du dispositif d'étiquette(104) et la position de plan horizontal fixe de la caméra (102) et une différence entre l'altitude du dispositif d'étiquette (104) et l'altitude fixe de la caméra (102) en utilisant la position de plan horizontal et l'altitude mesurée par l'unité de positionnement de caméra (302) et l'unité d'altitude de caméra (304) respectivement, et
l'unité de commande (308) est configuré pour commander le réglage de panoramique et d'inclinaison de la caméra (102) sur la base des différences ajustées.

10. Système selon une quelconque des revendications 2-9, dans lequel l'unité de commande (308) est en outre configuré pour ajuster un réglage de caméra, comme le focus ou le zoom, sur la base des différences de position de plan horizontal entre le dispositif d'étiquette (104) et la caméra (102) et des différences d'altitude entre le dispositif d'étiquette (104) et la caméra (102).

11. Système selon une quelconque des revendications 2-10, dans lequel la caméra (102) est configurée pour capturer une séquence vidéo d'images et dans lequel l'information relative à la position de plan horizontal du dispositif d'étiquette (104) et/ou l'altitude du dispositif d'étiquette (104) est ajoutée comme métadonnées à la séquence vidéo d'images.

12. Système selon une quelconque des revendications 2-11, dans lequel
le dispositif d'étiquette (104) comprend en outre un accéléromètre configuré pour mesurer l'accélération du dispositif d'étiquette (104),
le récepteur (306) est en outre configuré pour recevoir du dispositif d'étiquette (104) les données d'accéléromètre indiquant l'accélération du dispositif d'étiquette (104) et
l'unité de commande (308) est en outre configurée pour mettre à jour la position de plan horizontal et l'altitude du dispositif d'étiquette (104) sur la base des données d'accéléromètre, et commander le réglage de panoramique et d'inclinaison de la caméra (102) en utilisant la position de plan horizontal mise à jour et l'altitude mise à jour du dispositif d'étiquette (104).

13. Système selon une quelconque des revendications 2-12, comprenant une caméra supplémentaire (102a-e), dans lequel la caméra supplémentaire (102a-e) comprend l'unité d'altitude de caméra et l'unité de positionnement de caméra.

14. Procédé effectué dans un dispositif de caméra (300) comprenant une caméra (102) ayant une fonctionnalité de panoramique et d'inclinaison pour suivre un objet (106) marqué par un dispositif d'étiquette (104) comprenant une unité de positionnement d'étiquette (202) configuré pour mesurer une position de plan horizontal du dispositif d'étiquette (104) et une unité d'altitude d'étiquette configurée pour mesurer une altitude du dispositif d'étiquette (104) en appliquant un autre principe de mesure que l'unité de positionnement d'étiquette (202), le procédé comprenant de :
mesurer une position de plan horizontal par rapport à la caméra (102) ;
recevoir (S02) du dispositif d'étiquette (104) une position de plan horizontal du dispositif d'étiquette ;
déterminer (S06) une différence des positions de plan horizontal entre le dispositif d'étiquette (104) et la caméra (102) sur la base des positions de plan horizontal du dispositif d'étiquette (104) et de la position de plan horizontal relative à la caméra (102) et
commander (S08) un réglage de panoramique et d'inclinaison de la caméra (102) sur la base de la différence déterminée des positions de plan horizontal de sorte que la caméra (102) soit orientée dans la direction du dispositif d'étiquette (104),
**caractérisé par**
mesurer une altitude relative à la caméra (102) en appliquant un autre principe de mesure comparé à la mesure de la position de plan horizontal par rapport à la caméra (102),
recevoir, du dispositif d'étiquette (104), une altitude du dispositif d'étiquette (104) et
déterminer une différence d'altitudes entre le dispositif d'étiquette (104) et la caméra (102) sur la base de l'altitude du dispositif d'étiquette (104) et l'latitude relative à la caméra (102).

15. Support lisible par ordinateur sur lequel sont mémorisées des instructions de code adaptées pour mettre en oeuvre le procédé selon la revendication 14 lorsqu'elles sont exécutées par un dispositif ayan des capacités de traitement.
